# EUROPEAN PATENT SPECIFICATION

(11) **EP 2 189 857 B1**
(45) Date of publication and mention of the grant of the patent: **28.07.2010**
(21) Application number: 08169880.5
(22) Date of filing: 25.11.2008
(51) Int. Cl.: G05B 19/042

(54) **Trend log transfer**
Trendprotokolltransfer
Transfert de journal de tendances

(43) Date of publication of application: 26.05.2010
(73) Proprietor: Tac AB, 213 75 Malmö (SE)
(72) Inventor: Kennedy, Magnus, 275 96 Sövde (SE); Hansson, Björn, 214 21 Malmö (SE)
(74) Representative: Milanov, Nina Vendela Maria

(56) References cited:
- WO-A-03/007517
- US-A- 5 778 420
- US-A1- 2005 036 387

## Description

### Technical Field

The present invention relates to the general field of building control systems. Particularly the present invention relates to a method, an apparatus and a computer program for, in the building control system, determining transfer of data records from a trend log.

### Background

In the building automation industry it is common to have a configuration where a trend log is storing log values, or records, in a device. The data of the log values may later be uploaded to a parent server.

The trend log, also referred to as data entry error(s) or operational status log, may be defined as a property monitor for a specific object. When certain conditions of parameters or signals associated with the device are reached, a log record is produced with the property value and a time stamp. The log records are logged in a buffer, or trend log, for future retrieval. The trend log records may generally be logged in two ways, namely either periodically or in connection with a change of value of the monitored parameter or signal.

Conditions for transferring the data of the log values from the device to the parent server may be set by an operator or user. The conditions are normally defined as a static threshold by the percentage full of the trend log in the device. For example, a trend log may have a storage capacity corresponding to 1000 trend log records and the trend log may be arranged to be uploaded to the parent server when full to 60%. That is, when the trend log of the device reaches 600 records, a transfer is initiated and the trend log records are uploaded to the parent server.

JP2004133538 discloses an automatic backup system. A file processing history management means records a creation date of a file to be stored, the number of update times of the file and a final update date of the file into a file processing history table. The backup control means calculates a probability quantity that the file is accessed from file processing history data of the file every time the file is processed, compares the calculated probability quantity with a preset standard value, and backs up the file according to the result.

US 2005/036387 discloses a memory structures for storing, updating, and preserving meter data. Meter data is buffered until either a predetermined amount of data is obtained or until power to the meter is disabled, at which point the stored meter data is copied into selected blocks of flash memory.

US5778420 discloses a control unit in an external storage device which detects whether or not an internal reading or writing velocity is changed from one value to another value according to a zone of a storage medium.

WO03/007517 discloses the size of a buffer to be automatically changed in response to changes in network conditions.

### Summary of the Invention

A control device may be associated with a large number of logs. Setting up the control device to reduce the risk for loss in data is often complex and time consuming. Aspects of when the records are logged as well as the size and interval and the filling ratio threshold determining when to upload need to be considered and are almost impossible to set.

One objective of the disclosed method is to overcome or at least mitigate problems a static filling ratio threshold can introduce. Firstly, it has been noted that trend logs may fill up very quickly. The rate of filling may depend on type, interval, change of value, and size. It has further been noted that a transfer may not be indefinitely short in time. Since there may be significant overhead in time for file transfer setting a very low filling ratio threshold may actually causing the control system to be less effective and eventually loss of data may occur. Thus if many trend logs need to be transferred at the same time there may be a possibility to lose records *inter alia* due to delays in transfer.

According to first aspect there is provided a method for determining transfer of data records from a trend log, comprising receiving a time to fill parameter, hereinafter denoted TTF, pertaining to a pre-defined fraction of the trend log having been filled; receiving a previous time to fill parameter, hereinafter denoted PTTF, pertaining to a previous pre-defined fraction of the trend log having been filled; receiving a transfer threshold parameter, hereinafter denoted TT, associated with the PTTF parameter; and determining transfer of data records in case the value of the TTF parameter is smaller than the ratio between the PTTF parameter and a first auxiliary parameter, hereinafter denoted FA, associated with the TT parameter.

Thus transfer of data records from a trend log may be determined from a plurality of parameter pertaining to the current filling rate of the trend log.

The proposed method may thus overcome, or at least mitigate the aforementioned problems by transferring a log when needed. Further, the disclosed method reduces the need for an operator to manually monitor or even set up the transfer process.

There is thus achieved a method of preventing a trend log to be full before backup may be taken. The risk of loss of data may be reduced. Unnecessary utilization of bandwidth may be avoided. File transfer overhead that minimized utilization of bandwidth may be avoided.

The method may further comprise determining a second auxiliary parameter as the difference between TTF and PTTF; determining a third auxiliary parameter, hereinafter denoted DFT, as the ratio between the second auxiliary parameter and the TTF parameter; and determining transfer of data records in case the value of the DFT parameter is smaller than the negative value of the difference between the value of the FA parameter and the number 1.

The TT parameter may be determined after each transfer of data records. Thus the proposed method may disclose an improved and dynamic transfer threshold parameter.

The method may further comprise receiving a safety factor parameter, hereinafter denoted SF; receiving a first scale factor, hereinafter denoted Ω; and wherein the FA parameter is determined as FA = ((Ω - TT) / (SF * Ω)) + 1. Thus the proposed method may allow for a safety factor to at least partly control the transfer determination.

The method may further comprise receiving a time to transfer -parameter, hereinafter denoted TTT, pertaining to the time duration for the previous transfer of data records; and wherein the value of the TT parameter is increased by a first pre-defined value in case the value of the TTT parameter is smaller than the ratio between the TTF parameter and the SF factor and the value of the TT parameter is smaller than a first pre-defined threshold value. Thus the proposed method may allow for the time to transfer to at least partly control the transfer determination.

The method may further comprise receiving a second scale factor, hereinafter denoted w; and determining the value of the TT parameter such that TTT ≥ (FA-1) * Ω/ω.

The value of the TT parameter may be determined to be larger than a second pre-defined threshold value.

The method may further comprise receiving a value parameter pertaining to the number of accumulated data records since the last transfer of data records; and determining transfer of data records in case the value of the value parameter is larger than a third pre-defined threshold value. Thus the disclosed method may allow for at least one additional transfer condition to be determined.

The method may further comprise receiving a value parameter pertaining to the elapsed time since the last transfer of data records; and determining transfer of data records in case the value of the value parameter is larger than a fourth pre-defined threshold value. Thus the disclosed method may allow for at least one further transfer condition to be determined.

The TT parameter may be determined in terms of fixed percentages.

The initial value of the TT parameter may be 10%.

The value of the SF parameter may be ≥ 2.

The trend log may be associated with a local sub-database from a plurality of sub-databases, each one of the plurality of sub-databases being associated with further trend logs, respectively, the method may be repeated for at least one of the further trend logs, and the method may further comprise selecting one trend log from the group of the trend log and the at least one of the further trend logs; and transmitting data records from the selected trend log. Thus the method may be applied in order to determine which trend log to transfer.

The method may first be applied locally to al local sub-databases and then globally all local databases in a building control system.

According to a second aspect there is provided an apparatus comprising circuitry configured to perform a method as disclosed above.

According to a third aspect there is provided a computer program product comprising software instructions stored on a computer-readable medium, which when executed on a processor performs a method according the above.

The second and third aspects may generally have the same features and advantages as the first aspect.

Generally, all terms used in the claims are to be interpreted according to their ordinary meaning in the technical field, unless explicitly defined otherwise herein. All references to "a/an/the [device, event, message, alarm, parameter, step etc.]" are to be interpreted openly as referring to at least one instance of said device, event, message, alarm, parameter, step etc., unless explicitly stated otherwise. The steps of any method disclosed herein do not have to be performed in the exact order disclosed, unless explicitly stated.

### Brief Description of the Drawings

Embodiments of the present invention will now be described, by way of example, with reference to the accompanying schematic drawings, in which
Fig. 1 is a schematic view of a system according to an embodiment,
Fig. 2 is a schematic view of a system according to an embodiment,
Fig. 3 is an illustration of a time axis according to an embodiment,
Fig. 4a is an illustration of a memory for a trend log according to an embodiment,
Fig. 4b is an illustration of a trend log list according to an embodiment,
Fig. 5 is an illustration of a trend log view according to an embodiment,
Fig. 6 is an illustration of a trend log view according to an embodiment,
Fig. 7 is an illustration of a trend log list according to an embodiment,
Fig. 8 is a flowchart according to an embodiment,
Fig. 9 is a flowchart according to an embodiment.

### Detailed Description of Preferred Embodiments

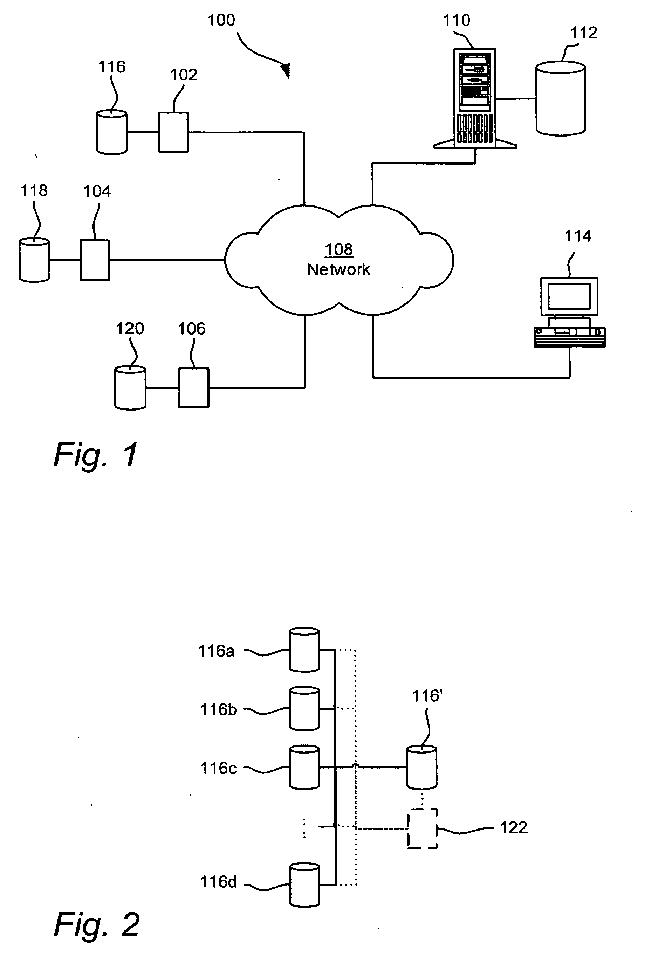

A system 100 according to an embodiment is illustrated in Fig. 1. The system 100 will be described in an operating state. The system 100 comprises a plurality of building control devices 102, 104, 106 which are operatively connected to a communications network 108. Typically the connection between the building control devices 102-106 and the network 108 is a narrowband connection. Each of the control devices 102, 104, 106 is a control device typical and common for sensing different events or parameters when controlling various sub-systems in a building control system.

For example, a first sub-system may be a temperature control system which regulates the temperature in a room in the building, in which case the control devices 102, 104, 106 comprise temperature sensors and various control means for detecting, e.g., if a measured temperature is within a desired temperature range.

For example, a second sub-system may be a security control system which regulates access to a room in the building, in which case the control devices 102, 104, 106 comprise motion sensors and various control means for detecting, e.g., if personnel (try to) gain access to rooms or buildings without authorization.

Each building control device 102, 104, 106 is operatively connected to a local database 116, 118, 120, wherein each database 116, 118, 120 is associated with at least one local trend log. The trend log logs and stores variables, values or records pertaining to signals associated with the building control device to which the trend log is operatively connected. In order to store a large amount of records, a so-called extended, or central, trend log can be utilized. The extended trend log will be further described below *inter alia* with reference to the central database 112. The records of the trend log and/or the extended trend log may be stored numerically in a trend log list. The records may also be associated with a trend chart. The records may also be subject to one or more data processing steps.

The trend log may thus be used to log a variable or a signal value and then to store the records. A record may contain a log value or an event as well as a time stamp associated with the time of recording the value. The record may comprise one or more comments. A trend log may log an analogue variable, a binary variable, or an integer variable.

The logging of a variable or value may be triggered by a time interval, a value change, or a trigger variable. Typically there are five types of trend logs: interval trend log, meter trend log, change of value trend log, variable-triggered (signal-triggered) trend log, manual trend log.

The interval trend log may log the variable or value according to a predetermined time interval. Each log value may be stored as a record in the trend log.

The variable-triggered (signal-triggered) trend log may log the variable or value according to a connected trigger signal. The logging may thus be triggered each time the trigger variable is triggered. Each log value may then be stored as a record in the trend log.

The change of value trend log may log the variable or value each time the difference between the current variable or value and the previous logged variable or value exceeds a pre-defined threshold. Each log value may then be stored as a record in the trend log.

The meter trend log is an interval trend log comprising extra functionality to senselessly handle consumption calculations independent of meter rollover and meter exchange.

The system 100 further comprises a computer server 110 operatively connected to a database 112, associated with an extended trend log. The extended trend log may be used to upload records from a local trend log, such as the local trend logs of the databases 116, 118, 120 as disclosed above, or from one or more external trend logs (not shown). The extended trend log may often be associated with a higher server level than the local trend logs. The extended trend log usually is associated with a database having more storage capacity than the database of a local trend log. The extra storage capacity enables the central database 112 to store more records than the local databases 116, 118, 120. As will be further explained below the extended trend log may be instructed to upload log data from the local trend logs according to given criteria. The extended trend log may be associated with a trend log list or a trend chart. According to some embodiments the extended trend log may not be able to log variables or values but only to store variables or values.

The computer server 110 is further operatively connected to the communications network 108. The communications network 108 may be an internal network (a so called Intranet) of a building, of a collection of buildings, of a company, of a business enterprise, or the like. The communications network 108 may also be a wide area network. The communications network 108 may be wired, wireless, or any combinations thereof. Typically the communications network 108 is a broadband network, wherein, as stated above, the connections to the control devices 102-106 typically are narrowband connections.

One or more operator devices 114 is also operatively connected to the network 108. The operator device 114 may be associated with operators, such as maintenance personnel; they may be fully automated capable of handling events independently of operators, or any combination thereof.

Communication between the computer server 110, the operator device 114 and the building control devices 102, 104, 106 is per se performed in any suitable, known manner, and includes sending various kinds of signals or messages between the devices 102, 104, 106, 110, 114 operatively connected to the network 108.

A building control system, such as the system 100 of Fig. 1 may comprise a number of different building control sub-systems, wherein each sub-system is associated with a unique functionality. The building control system 100 may also comprise a number of different building control sub-systems, wherein each sub-system is associated with different locations, such as different buildings, different floors within a building or different rooms within one floor, etc. The building control system 100 may represent a combination of different functionalities and different locations.

Fig. 2 illustrates a local database 116', such as one of the local databases 116, 118 or 120 of Fig. 1 as disclosed above. The local database 116' is further associated with a plurality of local sub-databases 116a, 116b, 116c, 116d. Typically the local databases 116, 118, 120 may each be associated with one hundred or more local sub-databases, such as the local sub-databases 116a-116d. Each one of the local sub-databases 116a-116d may be associated with a building control functionality of a building control device.

Fig. 2 also illustrates an apparatus 122 operatively connected to the local database 116' and the plurality of local sub-databases 116a, 116b, 116c, 116d. Alternatively, at least part of the functionality associated with the apparatus 122 may be comprised in the local database 116' and/or the local sub-databases 116a, 116b, 116c, 116d. The apparatus 122 may be configured to determine transfer of data records from the local sub-databases 116a, 116b, 116c, 116d to the local database 116'. The apparatus 122 may be configured to determining transfer of data records from the local database 116' to the central database 112 (not shown in Fig. 2).

The apparatus 122 may comprise a receiver and a transmitter (or a transceiver) for receiving and transmitting communications signals and data from and to the local database 116' and the local sub-databases 116a, 116b, 116c, 116d. The apparatus 122 may further comprise a processor operatively connected to the receiver and the transmitter (or transceiver), which processor is configured to perform functionalities related to handling transfer of the trend logs associated with the local database 116' and the local sub-databases 116a, 116b, 116c, 116d. The apparatus 122 may further comprise a memory operatively connected to the processor, wherein the memory may comprise a computer-readable medium and be configured to store instructions, such as software instructions, and data pertaining to handling of trend log transfers. That is, the functionality provided by the apparatus 122 may facilitate trend log records being transferred to the extended trend log of the central database 112. The functionality of the apparatus 122 will be further disclosed below.

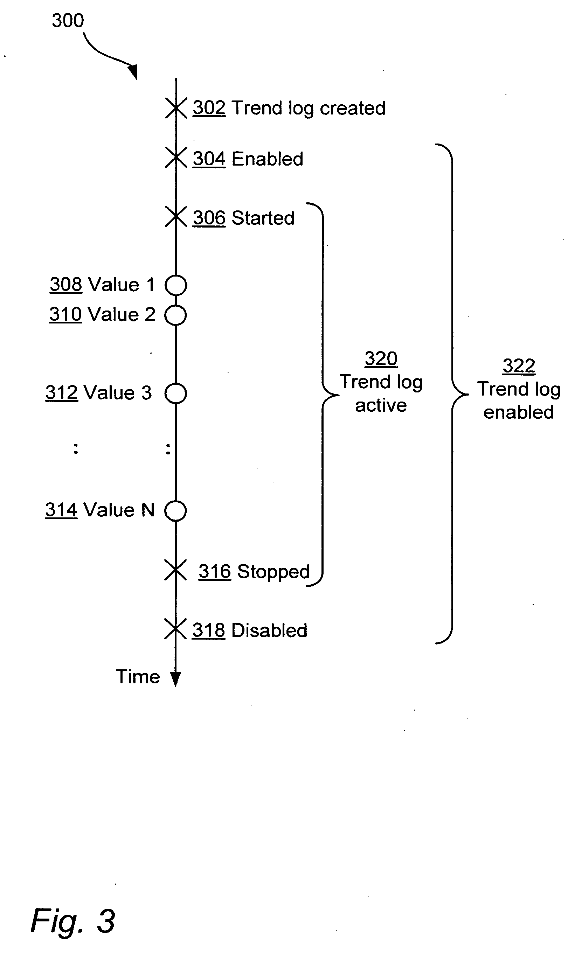

Fig. 3 illustrates a timeline 300 associated with a trend log. At a step 302 the trend log is created. At a step 304 the trend log is enabled. Typically the trend log has to be enabled before it can be activated, or started, in a step 306. When enabled the trend log may be activated when one or more start conditions are fulfilled. Examples of start conditions may be (but are not limited to): direct start wherein the trend log may start immediately, signal start wherein the trend log may start according to a connected start signal, time start wherein the trend log may start when a predetermined set time has elapsed. The one or more start conditions may be pre-set or may be set by an operator or user utilizing a trend log properties pane, as disclosed below. When the trend log has been started one or more values, as indicated by the reference numerals 308, 310, 312, 314, are read and stored in the trend log. The values may arrive periodically or non-periodically. Typically the values appear non-periodically for event-driven control devices. For such event-driven control devices the values may at times arrive in bursts. Thus, for event-driven control devices it may be difficult to estimate or even to predict the arrival time for a next value. The trend log is said to be active, as indicated by the reference numeral 320, from the time of start 306 to the time of stop 316. The trend log may be stopped due to maintenance, transfer of the trend log records, and so on. When the trend log has been stopped it can be disabled in a step 318. The trend log is said to be enabled, as indicated by the reference numeral 322, from the time of enablement 304 to the time of disablement 318.

The trend log may be constantly operatively connected to its input signal (so-called online subscription). Alternatively the trend log may only be operatively connected to its input signal when the trend log is triggered (so-called offline subscription). The trend log may be connected until a value is logged or until the connection is timed-out. The length of the time-out may be pre-defined. For example, the length of the time-out may be set to 10 percent of the previous log interval, with a minimum of 10 seconds and a maximum of one week. A missed value from an online subscription may be registered directly whereas a missed value from an offline subscription may be registered when the connection is timed-out. So-called interval trend logs and meter trend logs may use online subscription for short intervals (say, shorter than one minute) and offline subscription for long intervals (say, one minute or longer). So-called change of value trend logs may use online subscription. So-called signal triggered logs may use offline subscription.

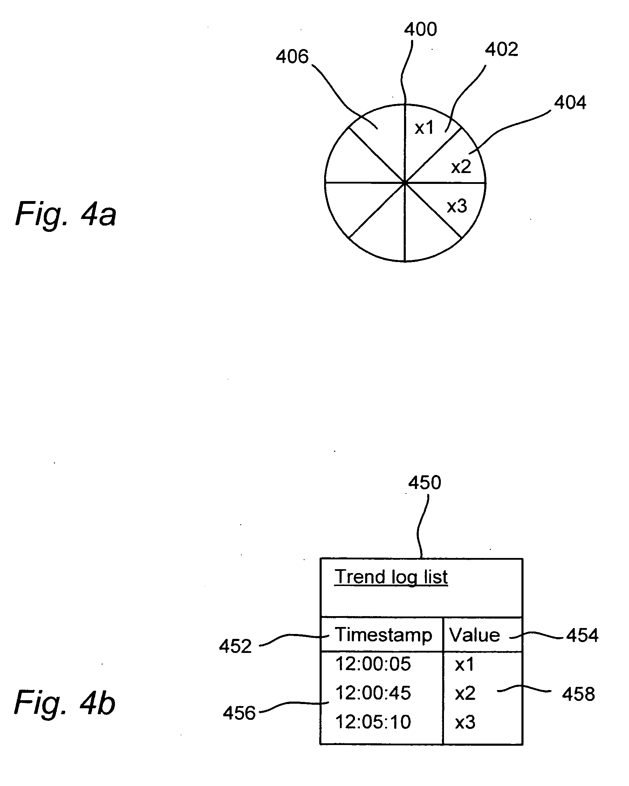

Fig. 4a is a schematic illustration of a memory 400 for a trend log utilizing circular storage. That is, according to this embodiment every record in the trend log will eventually be overwritten. How many records a trend log can store before overwriting old ones generally depends on the size of the trend log. Typically the trend log may store one hundred or more trend log records. According to the example of Fig. 4a the memory 400 comprises eight memory cells, three of which are denoted by the reference numerals 402, 404 and 406. Thus the memory of the trend log according to the example of Fig. 4a has eight memory cells. Assume, without losing generality, that initially all cells are empty. The logging starts (*inter alia* according to the procedure disclosed with reference to Fig. 3) and the first record x1 is stored in the first cell 402. According to Fig. 4a three cells of the memory 400 have been associated with the records x1, x2, and x3 respectively. Thus, for this example memory cell 406 is empty. After eight loggings all memory cells of the memory 400 are full. If the trend log is not at least partly emptied, the next logging x9 may overwrite the oldest record (i.e. the record x1 in cell 402). The next logging x10 may then overwrite the record x2 in cell 404 and so on. Thus if the trend log is not emptied in due time trend log records may be lost.

Fig. 4b illustrates a typical example of a trend log list 450. The trend log list 450 may be utilized in order to display the records of a trend log. The trend log records may be associated with a time stamp 452 and a value 454. The trend log list 450 comprises three trend log values x1, x2, x2 as illustrated in the list 458, and three time stamps 12:00:05, 12:00:45, 12:05:10 as illustrated in the list 460, wherein each one of the time stamps is associated with one of the trend log values. The records of the trend log may be processed by one or more calculations before they are represented in the trend log list 450. The trend log list 450 may only be able to represent one trend log at a time.

Table 1 shows a number of trend log properties and their associated description, which properties may be set for each trend log. It should be noted that some of the trend log properties of Table 1 may be optional. The trend log may comprise properties not shown in Table 1.

**Table 1: Example of trend log properties**

| Property | Description |
|---|---|
| Object Type | Defines the object type, which object type may define properties of the object |
| Object Name | Defines the name of the trend log |
| Description | Associates a description with the trend log. |
| References | Defines objects that are connected to the trend log |
| Point to log | Defines a path to the control point to be logged |
| Delta | Defines the minimum value change that triggers a new logging |
| Log type | Defines the type of log |
| Interval | Defines how often the control point is to be logged |
| Trigger signal | Defines a path to the signal that triggers the trend log |
| Trigger when | Defines when the point is to be logged, *inter alia* when the variable changes to 1) positive, 2) negative, or 3) at every toggle (every change) |
| Number of values | Defines the number of values to be stored before old values are overwritten |
| Activation type | Defines the method of starting the trend log |
| Start time | Defines the start time of the trend log |
| Start signal | Defines the signal that starts the trend log |
| Follow start signal | Selected true to start and stop the trend log, following the start signal |
| Status | Defines the status of the trend log as started or stopped. The status may *inter alia* be displayed as red (stopped) or green (started) in a traffic light icon |
| Enabled | Defines the enabled status of the trend log as enabled or disabled. The enablement status may *inter alia* be displayed as red (disabled) or green (enabled) in a traffic light icon |
| Clear when enabled | If true the trend log is cleared when it is enabled |

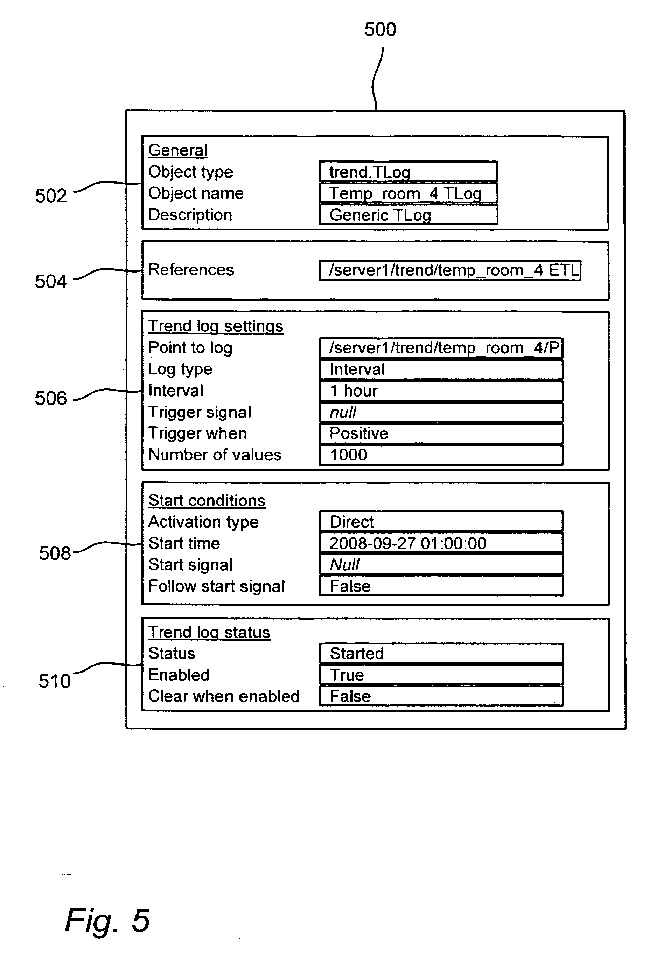

Fig. 5 illustrates an example trend log view, or pane, 500 comprising properties of Table 1. The values may be set by an operator. Some values may be default preset values. According to the exemplary illustration of Fig. 5 the trend log view 500 comprises general settings 502, such as object type, object name, and description. The trend log view 500 further comprises a references field 504, a trend log settings field 506, a number of start conditions 508 and properties pertaining to the trend log status 510.

Table 2 shows a number of properties of the extended trend log and their associated description, which properties may be set for each extended trend log. It should be noted that some of the properties of Table 2 may be optional. The extended trend log may comprise properties not shown in Table 2.

**Table 2: Example of extended trend log properties**

| Property | Description |
|---|---|
| Object Type | Defines the object type, which object type may define properties of the object |
| Object Name | Defines the name of the trend log |
| Description | Associates a description with the extended trend log |
| References | Defines objects that are connected to the trend log |
| Monitored log | Defines a path to trend log(s) that records are transferred from |
| Smart log | If true the transfer of the monitored trend logs to the extended trend log is optimized |
| Upload every | Defines a transfer rate of monitored trend log(s) to the extended trend log |
| Upload at least every | Defines a minimum transfer rate of monitored trend log(s) to the extended trend log |
| Number of values | Defines the number of values to be stored before old values are overwritten |

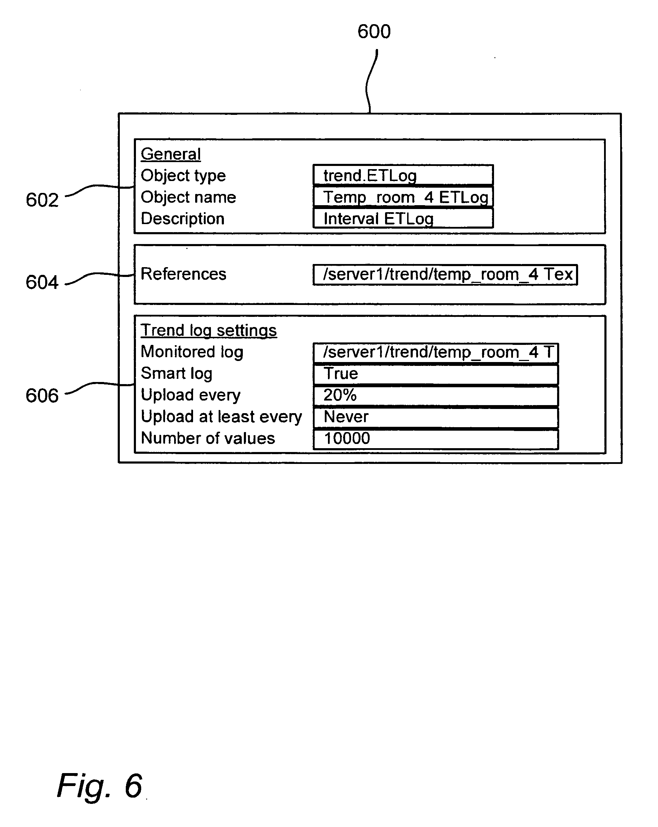

Fig. 6 illustrates an example trend log view, or pane, 600 comprising properties of Table 2. The values may be set by an operator. Some values may be default preset values. According to the exemplary illustration of Fig. 6 the trend log view 600 comprises general settings 602, such as object type, object name, and description. The trend log view 600 further comprises a references field 604 and a field trend log settings 606.

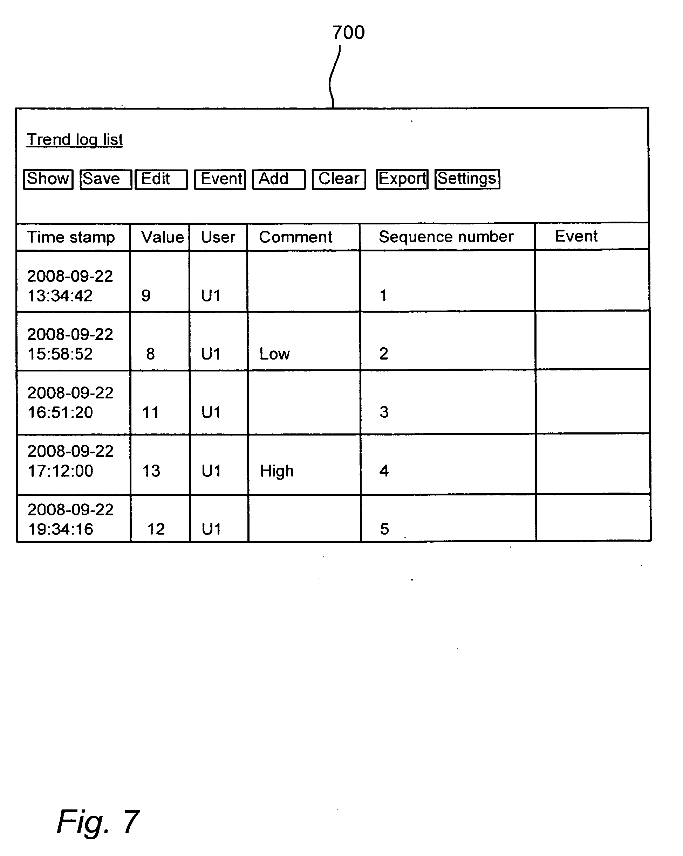

Fig. 7 illustrates an example trend log list 700 which may be used to display records of a trend log. The exemplary trend log list 700 comprises a table having columns labelled time stamp, value, user, comment, sequence number, and event. The column labelled time stamp may indicate a point in time when the trend log record was recorded. The time stamp may comprise date and/or time. The column labelled value may indicate the values of the recorded trend log records. The values may be Boolean, real, integer-valued, or any combination thereof. The column labelled user may indicate one or more users associated with the recorded trend log records. Thus, the trend log list 700 may provide the viewer of the trend log list with information pertaining to an operator or user responsible for maintenance and/or operation of the control device producing the trend log records. The column labelled comment may indicate comments associated with the trend log records. For example, the comments may indicate properties of the trend log records, such as the highest/lowest recorded values, and the like. The column labelled sequence number may indicate the sequence numbers of the trend log records. The column labelled event may indicate events associated with the trend log records. The events may *inter alia* pertain to the trend log being started, stopped, updated, a value having been manually entered, or the like.

The trend log list 700 may be associated with a plurality of functionalities pertaining to manipulation of the trend log records. The functionalities may *inter alia* pertain to functionalities such as show, save, edit, event, add, clear, export, and settings.

The apparatus 122, the functionalities of which may be at least partly comprised in the local database 116' or the local sub-databases 116a, 116b, 116c, 116d, may be configured to execute a method for determining transfer of data records from the local sub-databases 116a, 116b, 116c, 116d to the local database 116' and/or from the local database 116' to the central database 112.

The method for determining transfer may comprise evaluating a number of conditions which may be utilized in order to control whether or not data records should be transferred.

For example, data records may be transferred in case the underlying trend log reports that it has increased its filling by another fixed amount (i.e. a report of increased filling ratio, wherein the filling ratio is the ratio between the number of occupied memory cells and the total number of memory cells, see *inter alia* Fig. 4a) and the number of accumulated values since the last transfer exceeds a present threshold value. The fixed amount may be a predetermined fixed percentage. The fixed amount may be 10%. The present threshold parameter for deciding at which filling ratio the trend log records should be transferred may be estimated after each transfer. Initially the threshold parameter may be set to 10%.

For example, data records may be transferred in case the time since the last transfer exceeds a, for the trend log, manually configured longest time. That is, the data records may be transferred in order for "slow" trend logs to be transferred. Depending on the underlying functionality of the associated control device this condition may *inter alia* be evaluated every second, every minute, every hour, every day, etc. The condition may be evaluated for so-called "soft" margin (typically 3 seconds) so that interference between time limits and the evaluation interval is avoided, or at least mitigated.

For example, in case the time between two reports of increased filling ratio arrive increasingly often (i.e. data records are produced more often) the data records should be transferred independently of the present threshold.

If at least one of the above disclosed conditions is fulfilled the data records of the trend log should be transferred.

The above method may first be evaluated for all local sub-databases 116a, 116b, 116c, 116d and then for all local databases 116, 116', 118, 120. That is, in a building control system the above method may first be evaluated locally and then globally.

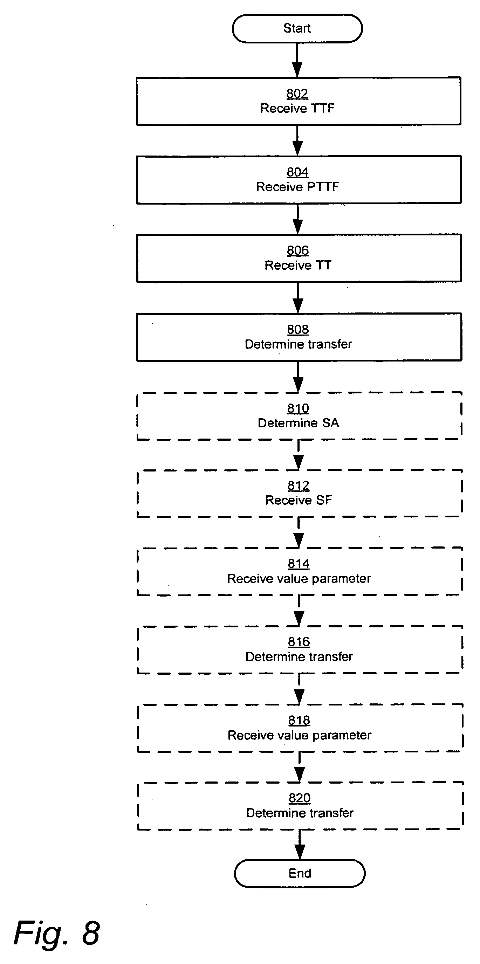

Fig. 8 is a flowchart illustrating a method for determining transfer of data records from a trend log according to an embodiment. The method comprises receiving, in a step 802, a time to fill parameter, hereinafter denoted TTF, pertaining to a pre-defined fraction of the trend log having been filled. That is, the TTF parameter may pertain to the time duration for filling the most recent fixed percentage of the trend log. The TTF parameter may pertain to the time duration for filling the most recent 10% of the trend log.

The method comprises receiving, in a step 804, a previous time to fill parameter, hereinafter denoted PTTF, pertaining to a previous pre-defined fraction of the trend log having been filled. That is, the PTTF parameter may pertain to the previous time duration for filling the same fixed percentage as the most recent percentage of the trend log.

The method comprises receiving, in a step 806, a transfer threshold parameter, hereinafter denoted TT, associated with the PTTF parameter. As will be further described below the TT parameter may be determined after each transfer of data records. The TT parameter may be determined in terms of fixed percentages. The initial value of the TT parameter may be 10%.

In a step 808 transfer of data records is determined in case the value of the TTF parameter is smaller than the ratio between the PTTF parameter and a first auxiliary parameter, hereinafter denoted FA, associated with the TT parameter. That is, transfer of data records is determined in case TTF < PTTF / FA, wherein FA depends on TT.

The method may further comprise determining, in a step 810a, a second auxiliary parameter, hereinafter denoted SA, as the difference between TTF and PTTF. That is, SA = TTF - PTTF. A third auxiliary parameter, hereinafter denoted DFT, may be determined in a step 810b as the ratio between the second auxiliary parameter SA and the TTF parameter. That is, DFT = SA / TTF. The method may further comprise determining transfer of data records, in a step 810c, in case the value of the DFT parameter is smaller than the negative value of the difference between the value of the FA parameter and the number 1. That is, transfer of data records may be determined in case DFT < - (FA -1 1).

The method may further comprise receiving, in a step 812a, a safety factor parameter, hereinafter denoted SF. The FA parameter may then be determined as FA = ((Ω - TT) / (SF * Ω)) + 1, wherein Ω is a received first scale factor received in a step 812b. That is, transfer of data records may be determined in case (TTF - PTTF) / TTF < - ((Ω - TT) / (SF * Ω)). According to an embodiment Ω = 100%. The value of the safety factor may be manually determined. The value if the safety factor may be larger than 2. That is, according to an embodiment SF ≥ 2.

The method may further comprise receiving, in a step 814a, a time to transfer parameter, hereinafter denoted TTT, pertaining to the time duration for the previous transfer of data records. That is, TTT may be the time needed for transferring the previous amount of trend log records from the local sub-database to the local database. TTT may be the time needed for transferring the previous amount of trend log records from the local database to the central database. The value of the TT parameter may be increased by a first pre-defined value in case the value of the TTT parameter is smaller than the ratio between the TTF parameter and the SF factor and the value of the TT parameter is smaller than a first pre-defined threshold value. This first pre-defined threshold value may be 90%. The value of the TT parameter may be determined to be larger than a second pre-defined threshold value. This second pre-defined threshold value may be 10%. That is, according to an embodiment 10% ≤ TT ≤ 90%. The value of the TT parameter may be determined, in a step 816b, such that TTT ≥ ( FA - 1) * Ω / ω, wherein ω is a received second scale factor, received in a step 816a. That is, the value of the TT parameter may be determined such that TTT ≥ ((Ω - TT) / (SF * Ω)) * Ω / ω. According to an embodiment ω = 10%.

The method may further comprise receiving, in a step 818a, a value parameter pertaining to the number of accumulated data records since the last transfer of data records, and in a step 818b, determining transfer of data records in case the value of the value parameter is larger than a third pre-defined threshold value.

The method may further comprise receiving, in a step 820a, a value parameter pertaining to the elapsed time since the last transfer of data records, and in a step 820b, determining transfer of data records in case the value of the value parameter is larger than a fourth pre-defined threshold value.

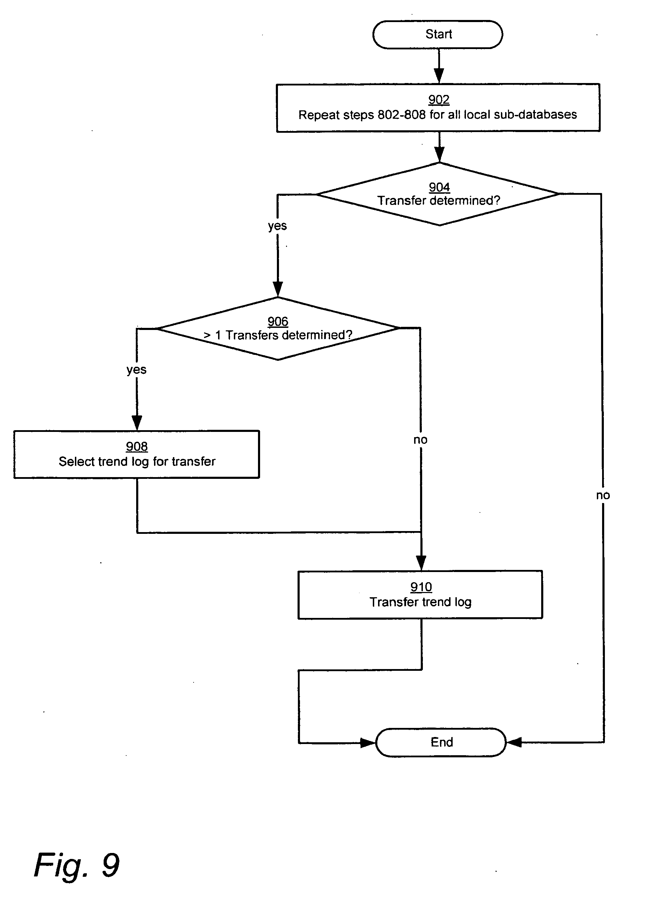

The method disclosed above may be repeated for all local sub-databases in order to decide from which, if any, of the local sub-databases the trend log records should be transferred to the local database. The method may then comprise selecting one of the local sub-databases and transferring the trend log records from the selected local sub-database to the local database. With reference to the flowchart of Fig. 9 such a method may comprise in a step 902 repeating steps 802-808 for all local sub-databases. According to an embodiment the method may further comprise repeating any of steps 810-820 for all local sub-databases. In a step 904 it is checked whether or not transfer has been determined for one or more of the local sub-databases. Further, In a step 906 it is checked whether or not transfer has been determined for exactly one of the local sub-databases. If transfer has been determined for exactly one of the local sub-databases transfer is performed in a step 910. If transfer has been determined for more than one of the local sub-databases, one of the local sub-databases is in a step 908 selected for transfer. The selection step will be further explained below. The selected local sub-database may then be transferred in step 910.

The method disclosed above may be repeated for all local databases in order to decide from which, if any, of the local databases the trend log records should be transferred to the central database. The method may then comprise selecting one of the local databases and transferring the trend log records from the selected local database to the central database. Such a method is similar to the method of Fig. 9.

The methods disclosed above does not *per se* provide a point in time for transfer, instead it controls a threshold (*inter alia* in terms of percentages of 10) for when the trend log should be transferred.

In case two or more trend logs should be transferred the trend log being associated with the largest magnitude of the ratio (TTF - PTTF) / TTF may be transferred. Alternatively the trend log being associated with the lowest value of the TT parameter may be transferred. Alternatively linear prediction may be utilized in order to estimate the point in time for transfer, hereinafter denoted PTT.

Such a method based on linear prediction may comprise receiving a trend log comprising at least one trend log item record, wherein the trend log is associated with trend log properties pertaining to at least: a point in time parameter, hereinafter denoted PT, of a previous transfer of trend log records from the trend log, an available size parameter, hereinafter denoted SP, of the trend log, and a parameter value, hereinafter denoted TA, pertaining to trend log items added to the trend log since the previous transfer of the trend log. The method further comprises receiving a time stamp, hereinafter denoted TS, associated with a current point in time; and estimating, from the trend log properties, and TTT, and the time stamp, a future point in time when the trend log should be transferred by estimating PTT as PTT = PT + (TS - PT) * SP / TA - TTT. Thus, PTT may be compared to other trend logs and the trend log with PTT that is nearest in time may be transferred.

It will be appreciated that a person skilled in the art can modify the above-described embodiments in many ways and still use the advantages of the invention as shown in the embodiments above. Thus, the invention should not be limited to the shown embodiments but should only be defined by the appended claims.

## Claims

1. A method for determining transfer of data records from a trend log, comprising
- receiving (802) a time to fill parameter, hereinafter denoted TTF, pertaining to a pre-defined fraction of said trend log having been filled;
- receiving (804) a previous time to fill parameter, hereinafter denoted PTTF, pertaining to a previous pre-defined fraction of said trend log having been filled;
- receiving (806) a transfer threshold parameter, hereinafter denoted TT, associated with said PTTF parameter; and
- determining (808) transfer of data records in case the value of said TTF parameter is smaller than the ratio between said PTTF parameter and a first auxiliary parameter, hereinafter denoted FA, associated with said TT parameter.

2. The method according to claim 1, further comprising
- determining (810a) a second auxiliary parameter as the difference between TTF and PTTF;
- determining (810b) a third auxiliary parameter, hereinafter denoted DFT, as the ratio between said second auxiliary parameter and said TTF parameter; and
- determining (810c) transfer of data records in case the value of said DFT parameter is smaller than the negative value of the difference between the value of said FA parameter and the number 1.

3. The method according to any one of claims 1-2, wherein said TT parameter is determined after each transfer of data records.

4. The method according to any one of claims 1-2, further comprising
- receiving (812a) a safety factor parameter, hereinafter denoted SF;
- receiving (812b) a first scale factor, hereinafter denoted Ω;
and wherein
- said FA parameter is determined as FA = ((Ω - TT) / (SF * Ω)) + 1.

5. The method according to claim 4, further comprising
- receiving (814a) a time to transfer parameter, hereinafter denoted TTT, pertaining to the time duration for the previous transfer of data records;
and wherein
- the value of said TT parameter is increased by a first pre-defined value in case the value of said TTT parameter is smaller than the ratio between said TTF parameter and said SF factor and the value of said TT parameter is smaller than a first pre-defined threshold value.

6. The method according to any one of claims 4-5, further comprising
- receiving (816a) a second scale factor, hereinafter denoted ω; and
- determining (816b) the value of said TT parameter such that TTT ≥ ( FA - 1) * Ω / ω.

7. The method according to claim 6, wherein the value of said TT parameter is determined to be larger than a second pre-defined threshold value.

8. The method according to any one of claims 1-7, further comprising
- receiving (818a) a value parameter pertaining to the number of accumulated data records since the last transfer of data records; and
- determining (818b) transfer of data records in case the value of said value parameter is larger than a third pre-defined threshold value.

9. The method according to any one of claims 1-8, further comprising
- receiving (820a) a value parameter pertaining to the elapsed time since the last transfer of data records; and
- determining (820b) transfer of data records in case the value of said value parameter is larger than a fourth pre-defined threshold value.

10. The method according to any one of claims 1-9, wherein said TT parameter is determined in terms of fixed percentages.

11. The method according to any one of claims 1-10, wherein the initial value of said TT parameter is 10%.

12. The method according to any one of claims 4-11, wherein SF ≥ 2.

13. The method according to any one of claims 1-12, wherein said trend log is associated with a local sub-database (116a, 116b, 116c, 116d) from a plurality of sub-databases (116a, 116b, 116c, 116d), each one of said plurality of sub-databases being associated with further trend logs, respectively, wherein said method is repeated (902) for at least one of said further trend logs, said method further comprising
- selecting (908) one trend log from the group of said trend log and said at least one of said further trend logs; and
- transmitting (910) data records from said selected trend log.

14. An apparatus (116, 116', 116a, 116b, 116c, 116d, 118, 120, 122) comprising circuitry configured to perform a method according to any one of claims 1-13.

15. A computer program product comprising software instructions stored on a computer-readable medium, which when executed on a processor performs a method according to any one of claims 1-13.

## Patentansprüche

1. Verfahren zum Bestimmen der Übertragung von Datensätzen aus einem Trendprotokoll, das Folgendes umfasst:
- Empfangen (802) eines Fülldauer-Parameters, im Weiteren als TTF (Time to Fill) bezeichnet, bezüglich eines zuvor festgelegten Bruchteils des Trendprotokolls, der gefüllt wurde;
- Empfangen (804) eines vorherigen Fülldauer-Parameters, im Weiteren als PTTF (Previous Time to Fill) bezeichnet, bezüglich eines vorherigen zuvor festgelegten Bruchteils des Trendprotokolls, der gefüllt wurde;
- Empfangen (806) eines Übertragungsschwellenparameters, im Weiteren als TT (Transfer Threshold) bezeichnet, der dem PTTF-Parameter zugeordnet ist; und
- Bestimmen (808) der Übertragung von Datensätzen, falls der Wert des TTF-Parameters kleiner ist als das Verhältnis zwischen dem PTTF-Parameter und einem ersten Hilfsparameter, im Weiteren als FA (First Auxiliary) bezeichnet, der dem TT-Parameter zugeordnet ist.

2. Verfahren nach Anspruch 1, das des Weiteren Folgendes umfasst:
- Bestimmen (810a) eines zweiten Hilfsparameters als die Differenz zwischen TTF und PTTF;
- Bestimmen (810b) eines dritten Hilfsparameters, im Weiteren als DFT bezeichnet, als das Verhältnis zwischen dem zweiten Hilfsparameter und dem TTF-Parameter; und
- Bestimmen (810c) der Übertragung von Datensätzen, falls der Wert des DFT-Parameters kleiner ist als der negative Wert der Differenz zwischen dem Wert des FA-Parameters und der Zahl 1.

3. Verfahren nach einem der Ansprüche 1-2, wobei der TT-Parameter nach jeder Übertragung von Datensätzen bestimmt wird.

4. Verfahren nach einem der Ansprüche 1-2, das des Weiteren Folgendes umfasst:
- Empfangen (812a) eines Sicherheitsfaktor-Parameters, im Weiteren als SF (Safety Factor) bezeichnet;
- Empfangen (812b) eines ersten Skalierungsfaktors, im Weiteren als Ω bezeichnet; und wobei
- der FA-Parameter als FA = ((Ω - TT) / (SF * Ω)) + 1.

5. Verfahren nach Anspruch 4, das des Weiteren Folgendes umfasst:
- Empfangen (814a) eines Übertragungsdauer-Parameters, im Weiteren als TTT (Time to Transfer) bezeichnet, bezüglich der Zeitdauer für die vorherige Übertragung von Datensätzen; und wobei
- der Wert des TT-Parameters um einen ersten zuvor festgelegten Wert erhöht wird, falls der Wert des TTT-Parameters kleiner ist als das Verhältnis zwischen dem TTF-Parameter und dem SF-Faktor und der Wert des TT-Parameters kleiner ist als ein erster zuvor festgelegter Schwellenwert.

6. Verfahren nach einem der Ansprüche 4-5, das des Weiteren Folgendes umfasst:
- Empfangen (816a) eines zweiten Skalierungsfaktors, im Weiteren als w bezeichnet; und
- Bestimmen (816b) des Wertes des TT-Parameters dergestalt, dass TTT ≥ (FA - 1) * Ω / ω.

7. Verfahren nach Anspruch 6, wobei der Wert des TT-Parameters so bestimmt wird, dass er größer als ein zweiter zuvor festgelegter Schwellenwert ist.

8. Verfahren nach einem der Ansprüche 1-7, das des Weiteren Folgendes umfasst:
- Empfangen (818a) eines Wert-Parameters bezüglich der Zahl akkumulierter Datensätze seit der letzten Übertragung von Datensätzen; und
- Bestimmen (818b) der Übertragung von Datensätzen, falls der Wert des Wert-Parameters größer ist als ein dritter zuvor festgelegter Schwellenwert.

9. Verfahren nach einem der Ansprüche 1-8, das des Weiteren Folgendes umfasst:
- Empfangen (820a) eines Wert-Parameters bezüglich der verstrichenen Zeit seit der letzten Übertragung von Datensätzen; und
- Bestimmen (820b) der Übertragung von Datensätzen, falls der Wert des Wert-Parameters größer ist als ein vierter zuvor festgelegter Schwellenwert.

10. Verfahren nach einem der Ansprüche 1-9, wobei der TT-Parameter in Form fester Prozentsätze bestimmt wird.

11. Verfahren nach einem der Ansprüche 1-10, wobei der Anfangswert des TT-Parameters 10% ist.

12. Verfahren nach einem der Ansprüche 4-11, wobei SF ≥ 2.

13. Verfahren nach einem der Ansprüche 1-12, wobei das Trendprotokoll einer lokalen Unterdatenbank (116a, 116b, 116c, 116d) aus mehreren Unterdatenbanken (116a, 116b, 116c, 116d) zugeordnet ist, wobei jede der mehreren Unterdatenbanken jeweils weiteren Trendprotokollen zugeordnet ist, wobei das Verfahren für mindestens eines der weiteren Trendprotokolle wiederholt wird (902), wobei das Verfahren des Weiteren Folgendes umfasst:
- Auswählen (908) eines Trendprotokolls aus der Gruppe des Trendprotokolls und des mindestens einen der weiteren Trendprotokolle; und
- Übertragen (910) von Datensätzen aus dem ausgewählten Trendprotokoll.

14. Vorrichtung (116, 116', 116a, 116b, 116c, 116d, 118, 120, 122), die Schaltungen umfasst, die dafür konfiguriert sind, ein Verfahren nach einem der Ansprüche 1-13 durchzuführen.

15. Computerprogrammprodukt, das Softwareanweisungen umfasst, die auf einem computerlesbaren Speichermedium gespeichert sind und die, wenn sie in einem Prozessor ausgeführt werden, ein Verfahren nach einem der Ansprüche 1-13 durchführen.

## Revendications

1. Procédé pour déterminer le transfert d'enregistrements de données à partir d'un journal de tendances, comprenant les étapes consistant à
- recevoir (802) un paramètre de temps de remplissage, dénoté par la suite TTF, se rapportant à une fraction prédéfinie dudit journal de tendances ayant été rempli;
- recevoir (804) un paramètre précédent de temps de remplissage, dénoté par la suite PTTF, se rapportant à une précédente fraction prédéfinie dudit journal de tendances ayant été rempli;
- recevoir (806) un paramètre de seuil de transfert, dénoté par la suite TT, associé audit paramètres PTTF; et
- déterminer (808) un transfert d'enregistrements de données au cas où la valeur dudit paramètre TTF est plus petite que le rapport entre ledit paramètre PTTF et un premier paramètres auxiliaire, dénoté par la suite FA, associé audit paramètre TT.

2. Procédé selon la revendication 1, comprenant en outre les étapes consistant à
- déterminer (810a) un second paramètre auxiliaire comme la différence entre TTF et PTTF;
- déterminer (810b) un troisième paramètre auxiliaire, dénoté par la suite DFT, comme le rapport entre ledit second paramètre auxiliaire et ledit paramètre TTF; et
- déterminer (810c) un transfert d'enregistrements de données au cas où la valeur dudit paramètre DFT est plus petite que la valeur négative de la différence entre la valeur dudit paramètre FA et le nombre 1.

3. Procédé selon une quelconque des revendications 1 à 2, dans lequel ledit paramètre TT est déterminé après chaque transfert d'enregistrements de données.

4. Procédé selon une quelconque des revendications 1 à 2, comprenant en outre les étapes consistant à:
- recevoir (812a) un paramètre de facteur de sécurité, dénoté par la suite SF;
- recevoir (812b) un premier facteur d'échelle, dénoté par la suite Ω;
et dans lequel
- 1 edit paramètre FA est déterminé comme FA = ((Ω - TT) / (SF*Ω)) + 1.

5. Procédé selon la revendication 4, comprenant en outre les étapes consistant à:
- recevoir (814a) un paramètre de temps de transfert, dénoté par la suite TTT, se rapportant à la durée temporelle pour le précédent transfert d'enregistrements de données; et dans lequel
- la valeur dudit paramètre TT est augmentée par une première valeur prédéfinie au cas où la valeur dudit paramètre TTT est plus petite que le rapport entre ledit paramètre TTF et ledit facteur SF et la valeur dudit paramètre TT est plus petite qu'une première valeur seuil prédéfinie.

6. Procédé selon une quelconque des revendications 4 à 5, comprenant en outre les étapes consistant à
- recevoir (816a) un second facteur d'échelle, dénoté par la suite ω; et
- déterminer (816b) la valeur dudit paramètre TT de telle sorte que TTT ≥ (FA-1) * Ω / ω.

7. Procédé selon la revendication 6, dans lequel la valeur dudit paramètre TT est déterminée afin d'être plus grande qu'une second valeur seuil prédéfinie.

8. Procédé selon une quelconque des revendications 1 à 7, comprenant en outre les étapes consistant à:
- recevoir (818a) un paramètre de valeur se rapportant au nombre d'enregistrements de données accumulés depuis le dernier transfert d'enregistrements de données; et
- déterminer (818b) le transfert d'enregistrements de données au cas où la valeur dudit paramètre de valeur est plus grande qu'une troisième valeur seuil prédéfinie.

9. Procédé selon une quelconque des revendications 1 à 8, comprenant en outre les étapes consistant à
- recevoir (820a) un paramètre de valeur se rapportant au temps écoulé depuis le dernier transfert d'enregistrements de données; et
- déterminer (820b) un transfert d'enregistrements de données au cas où la valeur dudit paramètre de valeur est plus grande qu'une quatrième valeur seuil prédéfinie.

10. Procédé selon une quelconque des revendications 1 à 9, dans lequel ledit paramètre TT est déterminé en terme de pourcentages fixes.

11. Procédé selon une quelconque des revendications 1 à 10, dans lequel la valeur initiale dudit paramètre TT est 10%.

12. Procédé selon une quelconque des revendications 4 à 11, dans lequel SF ≥ 2.

13. Procédé selon une quelconque des revendications 1 à 12, dans lequel ledit journal de tendances est associé à une sous-base de données locale (116a, 116b, 116c, 116d) à partir d'une pluralité de sous-bases de données (116a, 116b, 116c, 116d), chacune de ladite pluralité de sous-bases de données étant associée à d'autres journaux de tendances, respectivement, dans lequel ledit procédé est répété (902) pendant une au moins desdits autres journaux de tendances, ledit procédé comprenant en outre les étapes consistant à:
- sélectionner (908) un journal de tendances parmi le groupe dudit journal de tendances et dudit au moins un desdits autres journaux de tendances; et
- transmettre (910) des enregistrements de données à partir dudit journal de tendances sélectionné.

14. Appareil (116, 116', 116a, 116b, 116c, 116d, 118, 120, 122) comprenant des circuits configurés afin de mettre en oeuvre un procédé selon une quelconque des revendications 1 à 13.

15. Produit de programme informatique comprenant des instructions logicielles mémorisées sur un support lisible par ordinateur, qui quand il est exécuté sur un processeur met en oeuvre un procédé selon une quelconque des revendications 1 à 13.
